(19) Europäisches Patentamt

European Patent Office

Office européen des brevets

(11) EP 1 123 585 B1

(12) FASCICULE DE BREVET EUROPEEN

(45) Date de publication et mention
de la délivrance du brevet:
**25.06.2003 Bulletin 2003/26**

(51) Int Cl.⁷: **H04B 1/707**

(21) Numéro de dépôt: **99941685.2**

(22) Date de dépôt: **03.09.1999**

(86) Numéro de dépôt international:
**PCT/FR99/02102**

(87) Numéro de publication internationale:
**WO 00/014891 (16.03.2000 Gazette 2000/11)**

(54) **PROCEDE DE RECEPTION DE SIGNAUX AMRC AVEC SYNCHRONISATION OBTENUE PAR DOUBLE MULTIPLICATION RETARDEE ET RECEPTEUR CORRESPONDANT**

SIGNALEMPFANGSVERFAHREN FÜR CDMA-SIGNALE MIT SYNCHRONISATION MITTELS VERDOPPELTER, VERZÖGERTER MULTIPLIKATION UND DESSEN SIGNALEMPFANGSGERÄT

METHOD FOR RECEIVING CDMA SIGNALS WITH SYNCHRONISATION RESULTING FROM DELAYED DOUBLE MULTIPLICATION AND CORRESPONDING RECEIVER

(84) Etats contractants désignés:
**DE GB IT**

(30) Priorité: **04.09.1998 FR 9811087**

(43) Date de publication de la demande:
**16.08.2001 Bulletin 2001/33**

(73) Titulaire: **COMMISSARIAT A L'ENERGIE ATOMIQUE**
**75752 Paris Cédex 15 (FR)**

(72) Inventeurs:
• **BOULANGER, Christophe**
  **F-94200 Ivry sur Seine (FR)**
• **LEQUEPEYS, Jean-René**
  **F-38600 Fontaine (FR)**
• **PIAGET, Bernard**
  **F-38610 Venon (FR)**
• **LIONTI, Roselino**
  **F-38180 Seyssins (FR)**

(74) Mandataire: **Audier, Philippe André et al**
**Brevalex,**
**3, rue du Docteur Lancereaux**
**75008 Paris (FR)**

(56) Documents cités:
**EP-A- 0 562 529        EP-A- 0 630 120**
**EP-A- 0 726 658        EP-A- 0 854 586**

## Description

### Domaine technique

La présente invention a pour objet un procédé de réception de signaux AMRC avec synchronisation obtenue par double multiplication retardée et un récepteur correspondant.

Le sigle AMRC signifie "Accès Multiple à Répartition par les Codes" (en anglais CDMA pour "Code Division Multiple Access") et se réfère à une technique de communications numériques dans laquelle plusieurs utilisateurs empruntent un même canal de communications grâce à une attribution de séquences (ou codes) pseudo-aléatoires particulière.

### Etat de la technique antérieure

La technique AMRC est largement décrite dans la littérature. On peut consulter, à cet égard, les deux ouvrages généraux suivants :

- Andrew J. VITERBI : "CDMA-Principles of Spread Spectrum Communication" Addison-Wesley Wireless Communications Series, 1975,
- John G. PROAKIS : "Digital Communications" McGraw-Hill International Editions, 3ème édition, 1995.

On peut consulter également des documents de brevets émanant du présent Demandeur et notamment : FR-A-3 712 129, FR-A-2 742 014 et FR-A-2 757 333.

Les techniques décrites dans ces documents mettent en oeuvre une théorie du signal qu'on peut résumer brièvement pour une meilleure compréhension de l'invention. On considère une porteuse de pulsation w, modulée en phase par une fonction du temps P(t). Le signal modulé peut s'écrire :

$$s(t)=A(t)\cos[wt+P(t)]$$

où A(t) est l'amplitude du signal.

Cette expression peut se développer en :

$$s(t)=A(t)\cos wt \cos P(t)-A(t)\sin wt \sin P(t)$$

En notant I(t) la partie A(t)cos P(t), qui est en phase avec la porteuse et Q(t) la partie A(t)sin P(t), qui est en quadrature avec celle-ci, on peut encore écrire ce dernier signal sous la forme :

$$s(t)=I(t)\cos wt-Q(t)\sin wt$$

Le traitement du signal s(t) peut donc s'effectuer par le double traitement des parties I(t) et Q(t) qu'on notera plus simplement, par la suite, I et Q.

Les récepteurs qui traitent de tels signaux reçoivent en général, sur deux entrées distinctes, de tels signaux I et Q. Ils sont obtenus en multipliant le signal de réception par une onde soit en phase avec la porteuse, soit en quadrature avec celle-ci. Les circuits effectuent ensuite divers traitements selon les modulations exploitées. On trouve ainsi, dans le cas de modulation différentielle de phase, des traitements consistant à former la somme et la différence de produits d'échantillons retardés ou non, comme par exemple $(I_kI_{k-1}+Q_kQ_{k-1})$ et $(Q_kI_{k-1}-I_kQ_{k-1})$ où k désigne le rang d'un échantillon.

La première expression est dite "DOT" et la seconde "CROSS". Le signal DOT permet la détermination du déphasage entre deux symboles successifs, alors que les signaux DOT et CROSS, considérés ensemble, permettent de déterminer le nombre entier de fois $\pi/2$ du déphasage entre symboles successifs. Ces signaux DOT et CROSS permettent donc la démodulation correcte et sans ambiguïté lorsqu'une modulation différentielle de phase a été utilisée à l'émission.

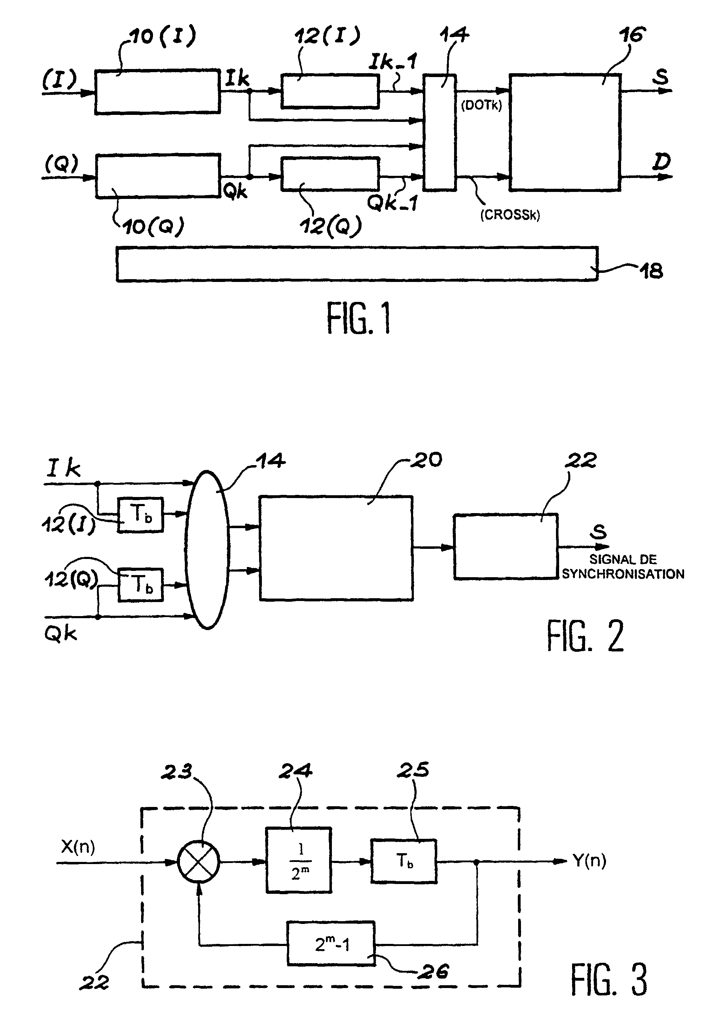

Les documents FR-A-2 742 014 ou FR-A-2 757 330 décrivent un récepteur mettant en oeuvre cette technique. Ce récepteur est représenté sur la figure 1 annexée. Il comprend deux voies similaires, l'une traitant la composante I en phase et l'autre la composante Q en quadrature. La première voie comprend des premiers moyens 10(I) aptes à remplir une fonction de filtrage adapté à la séquence pseudo-aléatoire utilisée à l'émission et des moyens de retard 12(I). La seconde voie comprend, comme la première, des seconds moyens 10(Q) aptes à remplir une fonction de filtrage adapté à ladite séquence pseudo-aléatoire et des moyens de retard 12(Q).

Le circuit comprend encore un circuit de multiplication 14 possédant :

- deux premières entrées, l'une reliée à la sortie des premiers moyens numériques 10(I) de filtrage et recevant un premier signal filtré $I_k$ et l'autre reliée à la sortie des premiers moyens aptes à remplir la fonction de retard 12(I) et recevant un premier signal filtré-retardé $I_{k-1}$,
- deux secondes entrées, l'une reliée à la sortie des seconds moyens 10(Q) de filtrage et recevant un second signal filtré $Q_k$ et l'autre reliée à la sortie des seconds moyens aptes à remplir la fonction retard 12(Q) et recevant un second signal filtré-retardé $Q_{k-1}$,
- des moyens pour calculer les deux produits directs entre signaux filtrés et filtrés-retardés de la première et de la seconde voies, à savoir $I_k I_{k-1}$ et $Q_k Q_{k-1}$, et les deux produits croisés entre signal filtré d'une voie et signal filtré-retardé de l'autre voie, à savoir $Q_k I_{k-1}$ et $I_k Q_{k-1}$,
- des moyens pour calculer la somme des produits directs, soit $DOT_k = I_k I_{k-1} + Q_k Q_{k-1}$ et la différence des produits croisés, soit $CROSS_k = Q_k I_{k-1} - I_k Q_{k-1}$.

Le circuit décrit dans les documents cités comprend encore un circuit d'intégration et de régénération d'horloge 16 recevant la somme des produits directs et la différence des produits croisés.

Ce circuit comprend enfin un moyen numérique de programmation 18 contenant des informations aptes à programmer notamment les premiers et seconds moyens de filtrage 10(I), 10(Q).

Le document FR-A-2 757 330 cité montre, sur ses figures 3, 4 et 5, l'allure des signaux DOT et CROSS dans le cas d'une modulation différentielle à deux états de phase (DPSK) ou à quatre états de phase (DQPSK). Il s'agit de pics marqués, tantôt positifs ou négatifs selon les cas.

Dans de tels récepteurs, la synchronisation, qui permet de localiser les données d'informations dans le signal filtré, est l'une des opérations fondamentales. Elle s'effectue en suivant les pics des signaux DOT et/ou CROSS et en déterminant l'instant où ces pics passent par un maximum. Le document FR-A-2 742 014, déjà cité, décrit un circuit comprenant essentiellement un comparateur, un registre et un compteur, moyens qui permettent d'engendrer une impulsion dont 1e front montant est calé sur le pic reçu. Cette impulsion constitue le signal de synchronisation.

Le circuit de la figure 1 peut être légèrement modifié, comme illustré sur la figure 2, par adjonction d'un circuit 22 de calcul d'une moyenne. Sur la figure 2, le circuit ovale 14 est censé symboliser la multiplication retardée des échantillons, c'est-à-dire la multiplication d'un échantillon par l'échantillon précédent conjugué. La valeur $T_b$ correspond à la durée d'un bit (ou d'un symbole) d'information.

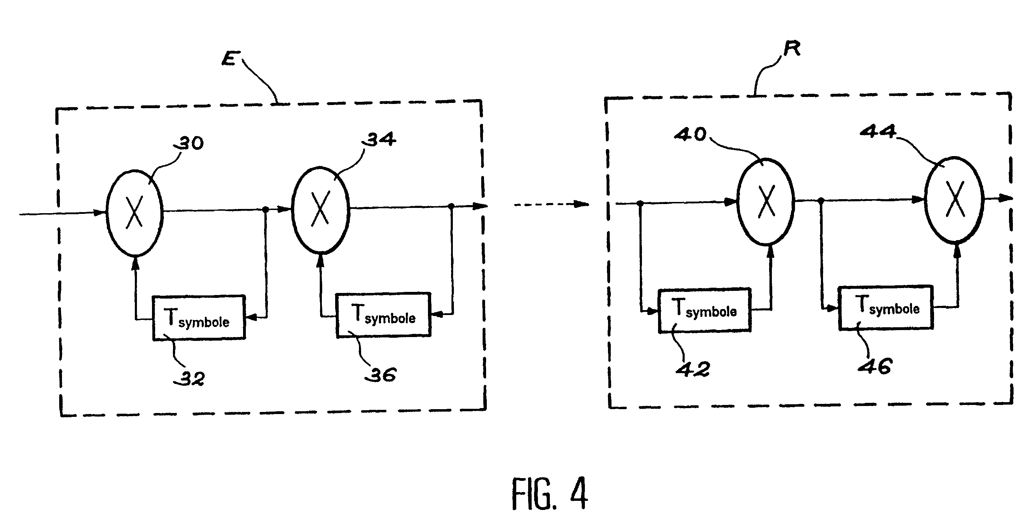

Le circuit 20 est un circuit de recherche du maximum de $|DOT_k|$ et $|CROSS_k|$ et le circuit 22 un circuit qui effectue une moyenne. Un exemple de ce dernier circuit est représenté sur la figure 3. Il comprend un multiplieur 23, un circuit 24 de gain $1/2^m$, un circuit retard 25 d'une quantité $T_b$ correspondant à la durée d'un bit de données et un circuit 26 de gain $2^m-1$ rebouclé sur le multiplieur 23.

Si l'on désigne par X(n) le signal d'entrée et par Y(n) le signal de sortie, on a :

$$Y(n)=X(n-1) \times Y(n-1)\frac{2^m-1}{2^m}$$

où m est un facteur réglable. Le signal Y(n) constitue le signal de synchronisation définitif.

Ce procédé de réception et les récepteurs correspondants, s'ils donnent satisfaction à certains égards, conduisent encore à un certain risque d'erreur sur l'information restituée, erreur que l'on mesure par une quantité dite taux d'erreur binaire (TEB).

La présente invention a justement pour but de remédier à cet inconvénient en réduisant ce taux au prix de modifications mineures.

Selon l'invention, cette amélioration est obtenue par la mise en oeuvre d'une technique dite de double multiplication retardée que l'on trouve dans un type particulier de détection à savoir la double détection différentielle. La double détection différentielle est connue dans les transmissions hertziennes, notamment dans les transmissions par satellite. Mais elle ne sert qu'au décodage de l'information et non à l'opération de synchronisation. Elle est décrite, par exemple, dans l'article de M.K. SIMON et D. DIVSALAR intitulé "On the Implementation and Performance of Single and Double Differential Detection Schemes" publié dans la revue "IEEE Transactions on Communications", vol. 40, n°2, février 1992, pp. 278-291.

La figure 4 annexée rappelle le principe de cette double détection différentielle. Le schéma représente un émetteur E et un récepteur R. Dans l'émetteur E, on trouve essentiellement un premier multiplieur associé et à un premier circuit à retard 32 d'une durée égale à la durée des symboles à transmettre, ainsi qu'un second multiplieur 34 associé à un second circuit à retard 36. Côté récepteur R, on trouve des moyens similaires, à savoir un premier multiplieur 40 associé à un premier circuit à retard 42 ainsi qu'un second multiplieur 44 associé à un second circuit à retard 46. Ces moyens effectuent un codage puis un décodage symétrique de l'information. Les données sont codées de telle sorte qu'une fois décodées, les prises de décision sont indépendantes du bruit Doppler, comme l'explique l'article cité.

Il faut souligner encore que, dans cette technique, il n'est pas question de synchronisation mais uniquement de codage-décodage.

La présente invention préconise d'utiliser le principe de la double multiplication retardée pour améliorer la qualité de l'opération de synchronisation. Par ailleurs, l'invention se place dans le cadre de l'AMRC, qui suppose un étalement de spectre des symboles d'information par des séquences pseudo-aléatoires, ce qui est un domaine très éloigné des transmissions hertziennes.

**Exposé de l'invention**

De façon précise, la présente invention a pour objet un procédé de réception d'un signal AMRC, comprenant une opération de corrélation avec des séquences pseudo-aléatoires appropriées, une opération de synchronisation apte à localiser les données dans le signal de corrélation obtenu et une opération de restitution des données, ce procédé étant caractérisé en ce que l'opération de synchronisation met en oeuvre une double multiplication , retardée du signal de corrélation.

L'invention a également pour objet un récepteur AMRC comprenant :

- des moyens de corrélation travaillant avec des séquences pseudo-aléatoires appropriées, et délivrant un signal de corrélation,
- des moyens de synchronisation aptes à délivrer un signal de synchronisation localisant les données dans le signal de corrélation,
- des moyens de décodage aptes à restituer les données,

ce récepteur étant caractérisé en ce que les moyens de synchronisation sont des moyens de double multiplication retardée du signal de corrélation.

**Brève description des dessins**

- la figure 1, déjà décrite, illustre un récepteur connu ;
- la figure 2, déjà décrite, illustre un mode particulier de réalisation des moyens de synchronisation ;
- la figure 3, déjà décrite, montre le principe d'un moyenneur ;
- la figure 4, déjà décrite, illustre le principe de la double détection différentielle utilisée pour le codage et le décodage de données d'information ;
- la figure 5 illustre schématiquement le procédé de double multiplication retardée mis en oeuvre dans l'invention ;
- la figure 6 montre l'allure d'un signal traité ;
- la figure 7 est un diagramme montrant les relations existant entre diverses grandeurs différentielles ;
- la figure 8 illustre de manière comparative les performances d'un récepteur conforme à l'invention.

**Description de modes particuliers de réalisation**

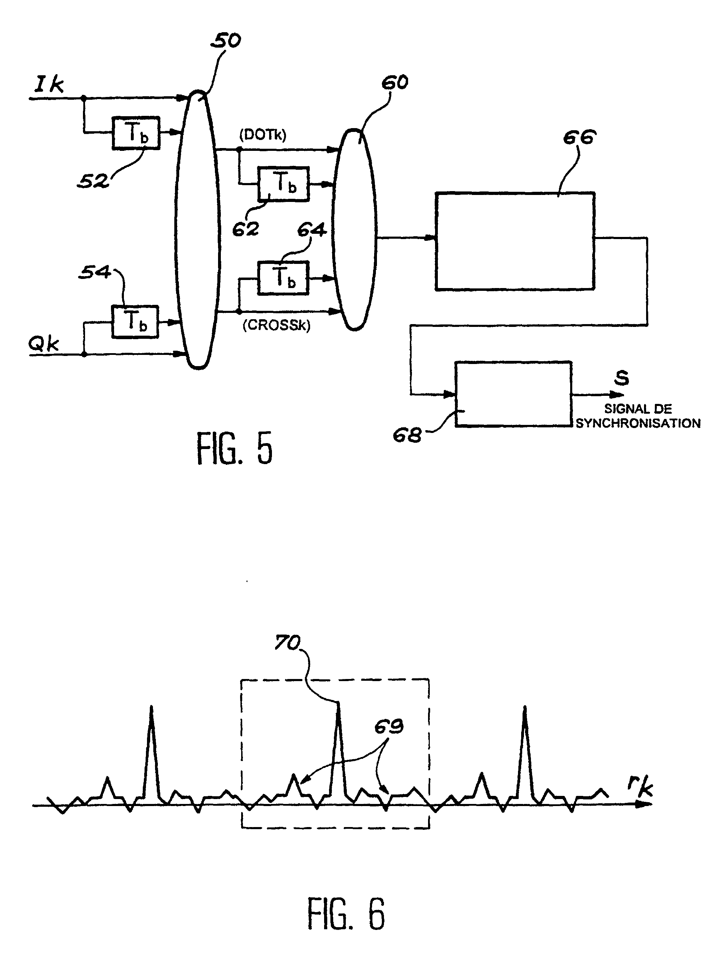

La figure 5 illustre schématiquement la partie synchronisation d'un récepteur conforme à l'invention. Les filtres adaptés (ou les corrélateurs), les moyens de décodage, etc... ne sont pas représentés car ils l'ont déjà été sur la figure 1. On suppose, en outre, que l'on traite des signaux complexes avec une composante I (en phase, ou réelle) et une composante Q (en quadrature, ou imaginaire).

Le circuit de la figure 5 reçoit des échantillons $I_k$ et $Q_k$ repérés par leur rang k. La double multiplication retardée est obtenue, d'une part, par le circuit 50 et les circuits à retard 52, 54, ceci pour la première multiplication retardée, et, d'autre part, par le circuit 60 et les circuits à retard 62, 64 pour la seconde. Le circuit représenté se complète par un circuit 66 de repérage des maxima et un moyenneur 68.

La première multiplication permet d'obtenir les composantes $DOT_k^{(1)}$ et $CROSS_k^{(1)}$ définies par

$$DOT_k^{(1)} = I_k I_{k-1} + Q_k Q_{k-1}$$

$$CROSS_k^{(1)}=I_{k-1}Q_k - I_kQ_{k-1}$$

L'indice haut (1) rappelle qu'il s'agit d'échantillons obtenus après une première multiplication retardée.

La seconde multiplication permet d'obtenir deux autres composantes, marquées par un indice haut (2), à savoir :

$$DOT_k^{(2)} = DOT_k^{(1)}.DOT_{(k-)1}^{(1)} + CROSS_k^{(1)}.CROSS_{(k-1)}^{(1)}$$

$$CROSS_k^{(2)} = DOT_{(k-1)}^{(1)}.CROSS_k^{(1)} - DOT_k^{(1)}.CROSS_{(k-1)}^{(1)}$$

La synchronisation selon l'invention s'effectue sur les signaux $DOT^{(2)}$ et $CROSS^{(2)}$.

Pour comprendre pourquoi la double multiplication retardée apporte un avantage par rapport à la simple multiplication, il faut revenir sur la théorie des communications numériques à étalement de spectre à l'aide de séquences pseudo-aléatoires et calculer la probabilité de détection d'un pic.

Un signal en bande de base correspondant au message émis par le $u^{\text{ième}}$ utilisateur peut s'écrire :

$$s_u(t) = \sqrt{P_u}b_u(t)a_u(t)e^{j\phi_u},$$

où :

- $P_u$ est la puissance reçue au niveau du récepteur ;
- 

$$b_u(t) = \sum_{i=0}^{M-1}b_{i,u}p_{T_b}(t-iT_b),$$

sont les données émises, où les $b_{i,u}$ prennent les valeurs +1 ou -1, M représentant le nombre de bits contenus dans le bloc d'informations considérées :

$$p_{T_b}(t) = \begin{cases} 1 \ si \ t \ est \ dans \ la \ plage \ 0 - T_b \\ 0 \ si \ t \ est \ en \ dehors \ de \ cette \ plage \end{cases}$$

- $a_u(t)$ est la séquence d'étalement, soit

$$a_u(t) = \sum_{i=0}^{M-1}\sum_{j=0}^{N-1}X_j^k p_{T_c}(t-jT_c-iT_b),$$

où $N = \dfrac{T_b}{T_c}$ est le gain de traitement ou longueur des séquences, $X_j^u$ prend les valeurs +1 ou -1 et $T_c$ est la durée d'un chip rectangulaire ;

- $\theta_u$ est une phase (relative à une phase de référence).

A cause de l'asynchronisme inhérent aux systèmes, le signal total reçu s'écrit :

$$r(t) = \sum_{u=1}^{U}S_u(t-\tau_u)+n(t),$$

où :

- U est le nombre d'utilisateurs ;
- $\tau_u$, dans la plage (0, $T_b$), est le retard associé au $u^{\text{ième}}$ utilisateur ;
- n(t) est un bruit blanc gaussien de densité spectrale de puissance unilatérale $\frac{N_0}{2}$.

Ce formalisme classique suppose :

- l'absence de trajets multiples,
- l'absence de rotations de phase au cours de la transmission (pas d'évanouissement ni d'effet Doppler),
- l'invariance du canal pendant la transmission,
- un canal de bande infinie (les signaux sont parfaitement rectangulaires).

Les sorties des filtres adaptés aux U séquences d'étalement forment les composantes d'un vecteur noté $\vec{y}$.

L'enveloppe complexe du vecteur $\vec{y}$ s'écrit :

$$\vec{y} = \vec{y_I}\cos(\Theta) + \vec{y_Q}\sin(\Theta)$$

La $i^{\text{ième}}$ sortie du filtre adapté au $u^{\text{ième}}$ utilisateur est le $((i-1)U+u)^{\text{ième}}$ élément de ce vecteur $\vec{y}$ ;

La grandeur $\Theta$ est une matrice diagonale de rang UM dont les éléments sont les phases associées au $i^{\text{ième}}$ bit du $u^{\text{ième}}$ utilisateur.

Les composantes en phase et en quadrature de y s'écrivent :

$$\begin{cases} Y_{I_{(i-1)U+u}} = y_{i,u}^I = \displaystyle\int_{(i-1)T_b+\tau_u}^{iT_b+\tau_u} r_I(t)\, a_u(t-\tau_u)\, dt \\[2em] Y_{Q_{(i-1)U+u}} = y_{i,u}^Q = \displaystyle\int_{(i-1)T_b+\tau_u}^{iT_b+\tau_u} r_Q(t)\, a_u(t-\tau_u)\, dt \end{cases}$$

où $r_I(t)=\text{Re}[r(t)]$ et $r_Q(t)=\text{Im}[r(t)]$. Matriciellement, on peut écrire :

$$\begin{cases} \vec{y}_I = RW\cos(\Theta)\,\vec{b} + \vec{n}_I \\[1em] \vec{y}_Q = RW\sin(\Theta)\,\vec{b} + \vec{n}_Q \end{cases}$$

où :

- R est une matrice carrée de rang UM :

$$R = \begin{pmatrix} R(0) & R(1) & & & & \\ R(-1) & R(0) & R(1) & & \text{\Large 0} & \\ & R(-1) & R(0) & & & \\ & & & \ddots & & R(1) \\ & \text{\Large 0} & & & \ddots & \\ & & & & R(-1) & R(0) \end{pmatrix}$$

- Le $(u,\ell)^{\text{ième}}$ élément de la matrice carrée de rang K, R(i) est :

$$\rho_{u,\ell}(i) = \int_{-\infty}^{+\infty} a_u(t - \tau_u)\, a_\ell(t^\circ i\, T_b - \tau_\ell)\, dt$$

- W est une matrice diagonale de rang UM, dont les éléments sont les racines carrées des puissances reçues, et définie de la même manière que $\Theta$ ;
- $\vec{b}$ est un vecteur de taille UM, dont le $j^{\text{ième}}$ élément (j=(i-1)U+u) est le $i^{\text{ième}}$ symbole transmis par le $u^{\text{ième}}$ utilisateur,
- $\vec{n}_I$ et $\vec{n}_Q$ sont des vecteurs de bruit coloré.

Si $\tau_1 < \tau_2 < ... < \tau_U$, alors R(1) est une matrice triangulaire supérieure de diagonale nulle, R(-1)=R(1)$^T$ où T représente une transposition, et R(i)=0, quel que soit |i|>1. Cette hypothèse non-restrictive n'altère en rien la généralisation du formalisme proposé.

On s'intéresse aux sorties de corrélation dans une fenêtre temporelle de durée égale à la durée des bits. Hors des pics, les signaux sur ces sorties s'écrivent :

$$\int_0^{T_b} r_I(t)\, a_u(t - nT_c)\, dt = r_{u,n},$$

(r pour partie réelle, voie I).

On peut simplifier cette notation en $r_u$ (respectivement $i_u$ pour la partie imaginaire de la voie Q) pour désigner les sorties de corrélation sur les voies I et Q, sur une fenêtre de durée $T_b$.

La figure 6 montre l'allure du signal $r_u$ avec un fond 69 et un pic 70, le cadre en tirets symbolisant la fenêtre temporelle correspondant à un bit de données. Si ces sorties ne contiennent pas de signal (en dehors du pic), on peut modéliser $r_u$ et $i_u$ par des processus gaussiens de moyenne nulle et écrire les probabilités :

$$\begin{cases} p(r_u) = \dfrac{1}{\sqrt{2\pi}\sigma}\, e^{-\frac{r_u^2}{2\sigma^2}} \\[4mm] p(i_u) = \dfrac{1}{\sqrt{2\pi}\sigma}\, e^{-\frac{i_u^2}{2\sigma^2}} \end{cases}$$

où :

$$\sigma^2 = \sigma_{N_0}^2 + \frac{U-1}{3N},$$

dans le cas de transmissions asynchrones. Dans les cas qui intéressent l'invention, $\sigma^2_{N_0}$ est très inférieur à $\frac{U-1}{3N}$, de sorte que $\sigma^2 \approx \frac{U-1}{3N}$.

La synchronisation, après la démodulation différentielle, peut être vue comme une détection quadratique, où l'on détermine la somme des carrés $r_u^2 + i_u^2$ (en toute rigueur, on calcule $r_{u,n}r_{u,n-N}+i_{u,n}i_{u,n-N}$, mais on peut simplifier l'exposé en prenant $r_u^2 + i_u^2$). Cette quantité représente le carré de l'amplitude $A_k$ du vecteur de composantes $r_u$, $i_u$ :

$$A_u^2 = r_u^2 + i_u^2.$$

On peut définir un angle $\phi_u$ tel que :

$$\begin{cases} r_u = A_u \cos(\phi_u) \\ i_u = A_u \sin(\phi_u) \end{cases}$$

Si $p(r_u, i_u)$ et $q(A_u, \phi_u)$ désignent les probabilités conjointes relativement à $(r_u, i_u)$ et $(A_u, \phi_u)$ on a :

$$p(r_u, i_u)dr_u di_u = \frac{1}{2\pi\sigma^2} e^{-\frac{r_u^2 + i_u^2}{2\sigma^2}} dr_u di_u = \frac{1}{2\pi\sigma^2} e^{-\frac{A_u^2}{2\sigma^2}} dr_u di_u = q(A_u, \phi_u)\, dA_u df_u$$

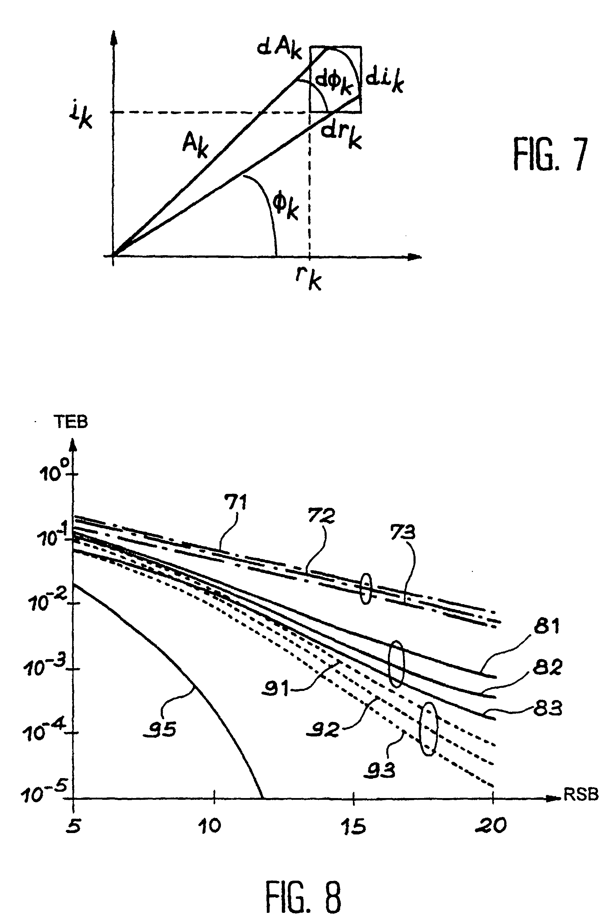

Les éléments différentiels cartésiens $dr_u$ et $di_u$ sont reliés aux éléments différentiels polaires $dA_u$, $d\phi_u$ selon le schéma de la figure 7. L'aire du rectangle est $dr_u.di_u$ et l'aire du secteur circulaire est $(A_u d\phi_u)dA_u$. On peut considérer que ces deux aires sont sensiblement égales et écrire :

$$dr_u di_u = A_u' d\phi_u dA_u$$

ce qui conduit à :

$$q(A_u, \phi_u) = \frac{A_u}{2\pi\sigma^2} e^{-\frac{A_u^2}{2\sigma^2}}.$$

$A_u$ et $\phi_u$ sont donc décorrélés et :

$$\begin{cases} q(\phi_u) = \frac{1}{2\pi} \\ q(A_u) = \frac{A_u}{\sigma^2} e^{-\frac{A_u^2}{2\sigma^2}} \end{cases}$$

Si les sorties de corrélation contiennent un signal correspondant aux pics de corrélation, leurs moyennes $m_{r_u}$ et $m_{i_u}$ ne sont plus nulles et les probabilités (notées avec une barre) deviennent :

$$\bar{p}(r_u, i_u) = \frac{1}{2\pi\sigma^2} e^{-\frac{(r_u - m_u)^2 + (i_u - m_u)^2}{2\sigma^2}} = \frac{1}{2\pi\sigma^2} e^{-\frac{A_u^2}{2\sigma^2} - \frac{m_{r_u}^2 + m_{i_u}^2 - 2r_u m_{r_u} - 2i_u m_{i_u}}{2\sigma^2}} = \bar{q}(A_u, \phi_u)\, dA_u d\phi_u$$

et il existe deux grandeurs $S_u$ et $\theta_u$ telles que :

$$\begin{cases} m_{r_u} = S_u \cos(\theta_u) \\ m_{u_u} = S_u \sin(\theta_u) \end{cases}$$

On obtient :

$$\overline{q}(A_u) = \int_{\phi_u=0}^{2\pi} \frac{1}{2\pi\sigma^2} e^{-\frac{A_u^{2\bullet}}{2\sigma^2}-\frac{S_u^2-2A_uS_u\cos(\phi_u-\theta_u)}{2\sigma^2}} d\phi_u = \frac{1}{\pi\sigma^2} e^{-\frac{A_u^2+S_u^2}{2\sigma^2}} I_0(\frac{A_uS_u}{\sigma^2})$$

où $I_0$ désigne la fonction de Bessel d'ordre zéro.

La probabilité de bonne détection du pic de corrélation est alors :

$$P^{(1)} = \int_{\mathfrak{R}} q(A_u)\left(\int_{x=A_u}^{+\infty} \overline{q}(x)\,dx\right) dA_u$$

soit

$$P^{(1)} = \int_{\mathfrak{R}} \frac{A_u e^{-\frac{A_u^2+S_u^2}{2\sigma^2}}}{\pi\sigma^2}\left(\int_{A_u}^{+\infty} e^{-\frac{x^2}{2\sigma^2}} I_0\left(\frac{xS_u}{\sigma^2}\right) dx\right) dA_u$$

Ce calcul vaut pour une seule multiplication retardée, d'où l'indice haut (1) affectant P. Il peut être étendu au cas de la double multiplication retardée, et d'une façon générale au cas de n multiplications retardées. Les expressions deviennent :

$$A_u^{2^n} = r_u^{2^n} + i_u^{2^n}$$

$$\begin{cases} r_u^{(n)} = A_u^{2^{n-1}}\cos(\phi_u) \\ i_u^{(n)} = A_u^{2^{n-1}}\sin(\phi_u) \end{cases}$$

L'expression de la probabilité devient :

$$\begin{cases} m_{r_u^{(n)}} = S_u^{2^{n-1}}\cos(\theta_u) \\ m_{i_u^{(n)}} = S_u^{2^{n-1}}\sin(\theta_u) \end{cases}$$

$$P^{(n)} = \int_{\mathfrak{R}^+} \frac{A_u e^{-\frac{A_u^{2^n}+S_u^{2^n}}{2s^2}}}{2^{n-1}\pi\sigma^4}\left(\int_{(A_u)^{2^{n-1}}}^{+\infty} e^{-\frac{x^2}{2\sigma^2}} (x)^{\frac{1}{2^{n-1}}-1} I_0\left(\frac{x(S_u)^{2^{n-1}}}{\sigma^2}\right) dx\right) dA_u$$

La question est maintenant de savoir si cette probabilité $P^{(n)}$ de bonne détection du pic est accrue lorsque n, (c'est-à-dire le nombre de multiplications retardées) est supérieur à 1.

Le Demandeur a calculé cette probabilité dans le cas de U=5 utilisateurs, N=63 (séquences à 63 "chips") et $S_u$=1. Les résultats sont rassemblés dans le tableau suivant :

| n | P$^{(n)}$ |
|---|---|
| 1 | 0,32 |
| 2 | 0,69 |
| 3 | 0,67 |
| 4 | 0,34 |
| 5 | 0,18 |

On voit que la synchronisation basée sur une double multiplication retardée est plus fiable que la synchronisation classique. Par contre, l'augmentation de n au-delà de 2 n'apporte rien, sinon une complexité matérielle accrue.

Les courbes de la figure 8 permettent une comparaison entre les performances obtenues avec l'invention et celles des techniques classiques. Elles montrent l'évolution du taux d'erreur de bits (TEB) en fonction du rapport signal sur bruit (RSB). Sur cette figure :

- les trois courbes 71, 72, 73 correspondent à un récepteur sans étage de suppression parallèle d'interférences d'accès multiple ; la courbe 71 correspond à l'art antérieur (une seule multiplication retardée), la courbe 72 correspond à l'invention (deux multiplications retardées) et la courbe 73 à une courbe idéale ;
- les trois courbes 81, 82, 83 correspondent à un récepteur possédant un seul étage de suppression parallèle d'interférences, avec les mêmes trois cas respectifs (unique multiplication retardée, double multiplication retardée, idéal) ;
- les trois courbes 91, 92, 93 correspondent à un récepteur à deux étages de suppression parallèle d'interférences avec les mêmes trois cas successifs ;
- la courbe 95 correspond au cas théorique idéal.

Ces résultats montrent l'intérêt de la double multiplication retardée pour la synchronisation. Cette opération n'est guère plus coûteuse que la simple multiplication retardée, si ce n'est qu'il faut la doubler pour chacune des voies. En revanche, elle améliore grandement la synchronisation, permettant de meilleures reconstructions et de meilleures estimations à chaque étage de suppression parallèle d'interférences.

**Revendications**

1. Procédé de réception d'un signal AMRC, comprenant une opération de corrélation avec des séquences pseudo-aléatoires appropriées, une opération de synchronisation apte à localiser les données dans le signal de corrélation obtenu, et une opération de restitution des données, ce procédé étant **caractérisé en ce que** l'opération de synchronisation met en oeuvre une double multiplication retardée du signal de corrélation échantilloné en effectuant une première multiplication retardée consistant à multiplier un échantillon du signal de corrélation par l'échantillon précédent conjugué (50, 52, 54), puis une seconde multiplication retardée consistant à multiplier un échantillon du signal ainsi obtenu par l'échantillon précédent conjugué dudit signal obtenu (60, 62, 64).

2. Procédé selon la revendication 1, dans lequel on recherche un maximum du signal obtenu par double multiplication retardée (66, 68) et on délivre un signal de synchronisation (S) correspondant audit maximum.

3. Procédé selon la revendication 2, dans lequel on effectue une moyenne de deux maxima successifs obtenus avant de produire le signal de synchronisation.

4. Procédé selon la revendication 4, dans lequel, le signal de corrélation étant un signal complexe avec une composante réelle $I_k$ et une composante imaginaire $Q_k$, le signal obtenu après la première multiplication retardée étant lui aussi complexe avec une composante réelle $DOT^{(1)}_k$ et une composante imaginaire $CROSS^{(1)}_k$ :

- pour effectuer la première multiplication retardée, on calcule la quantité $I_k I_{k-1} + Q_k Q_{k-1}$, ce qui fournit la composante réelle $DOT^{(1)}_k$ du nouveau · signal, on calcule la quantité $Q_k I_{k-1} - I_k Q_{k-1}$, ce qui fournit la composante $CROSS_k^{(1)}$ du nouveau signal,

- pour effectuer la seconde multiplication retardée, on calcule la quantité $(DOT_k^{(1)})(DOT^{(1)}_{k-1}) + (CROSS^{(1)}_k)$

(CROSS$^{(1)}_{k-1}$) ce qui donne la composante réelle DOT$^{(2)}_{k}$ du signal final et on calcule la quantité (DOT$^{(1)}_{k-1}$) (CROSS$^{(1)}_{k}$) - (DOT$_k$) (CROSS$^{(1)}_{k-1}$), ce qui donne la composante imaginaire CROSS$^{(2)}_{k}$ du signal final.

**5.** Récepteur de signal AMRC pour 1a mise en oeuvre du procédé selon la revendication 1, ce récepteur comprenant :

- des moyens de corrélation (10(I), 10(Q)) travaillant avec des séquences pseudo-aléatoires appropriées, ces moyens délivrant un signal de corrélation échantillonné,
- des moyens de synchronisation (16) aptes à délivrer un signal de synchronisation (S) localisant les données dans le signal de corrélation,
- des moyens de décodage (16) aptes à restituer les données (D),

ce récepteur étant **caractérisé en ce que** les moyens de synchronisation sont des moyens de double multiplication retardée du signal de corrélation échantillonné comprenant des moyens (50, 52, 54) (60, 62, 64) aptes à effectuer une première multiplication retardée consistant à multiplier un échantillon du signal de corrélation par l'échantillon précédent conjugué, puis une seconde multiplication retardée consistant à multiplier un échantillon du signal ainsi obtenu par l'échantillon précédent conjugué dudit signal obtenu.

**Patentansprüche**

**1.** Empfangsverfahren eines CDMA-Signals, eine Korrelationsoperation mit zweckentsprechenden Pseudozufallssequenzen, eine Synchronisationsoperation, fähig die Daten in dem erhaltenen Korrelationssignal zu lokalisieren, und eine Operation zur Wiederherstellung der Daten umfassend,
**dadurch gekennzeichnet,**
**dass** die Synchronisationsoperation eine verzögerte Doppelmultiplikation des abgetasteten Signals anwendet, indem sie eine erste verzögerte Multiplikation durchführt, darin bestehend, einen Abtastwert des Korrelationssignals mit dem konjugierten vorhergehenden Abtastwert zu multiplizieren (50, 52, 54), dann eine zweite verzögerte Multiplikation durchführt, darin bestehend, einen Abtastwert des derart erhaltenen Signals mit dem konjugierten vorhergehenden Abtastwert des genannten erhaltenen Signals zu multiplizieren (60, 62, 64).

**2.** Verfahren nach Anspruch 1, bei dem man ein Maximum des durch eine verzögerte Doppelmultiplikation erhaltenen Signals sucht (66, 68) und ein dem genannten Maximum entsprechendes Synchronisationssignal (S) liefert.

**3.** Verfahren nach Anspruch 2, bei dem man ein Mittel aus zwei aufeinanderfolgenden Maxima bestimmt, ehe man das Synchronisationssignal erzeugt.

**4.** Verfahren nach Anspruch 1, bei dem das Korrelationssignal ein komplexes Signal mit einer reellen Komponente $I_k$ und einer imaginären Komponente $Q_k$ ist, wobei das nach der ersten Multiplikation erhaltene verzögerte Signal auch komplex ist, mit einer reellen Komponente DOT$^{(1)}_{k}$ und einer imaginären Komponente CROSS$^{(1)}_{k}$ :

- zur Durchführung der ersten verzögerten Multiplikation berechnet man die Größe $I_k I_{k-1} + Q_k Q_{k-1}$, was die reelle Komponente DOT$^{(1)}_{k}$ liefert, und man berechnet die Größe $Q_k I_{k-1} - I_k Q_{k-1}$, was die Komponente CROSS$_k^{(1)}$ des neuen Signals liefert,
- zur Durchführung der zweiten verzögerten Multiplikation berechnet man die Größe (DOT$_k^{(1)}$)(DOT$^{(1)}_{k-1}$)+ (CROSS$^{(1)}_{k}$)(CROSS$^{(1)}_{k-1}$), was die reelle Komponente DOT$^{(2)}_{k}$ des finalen Signals liefert, und man berechnet die Größe (DOT$_k^{(1)}_{k-1}$)(CROSS$^{(1)}_{k}$)-(DOT$_k$)(CROSS$^{(1)}_{k-1}$), was die imaginäre Komponente des finalen Signals liefert.

**5.** CDMA-Signalempfänger zur Anwendung des Verfahrens nach Anspruch 1, umfassend:

- Korrelationseinrichtungen (10(I), 10(Q)), mit zweckentsprechenden Pseudozufallssequenzen arbeitend, wobei diese Einrichtungen ein abgetastetes Korrelationssignal liefern,
- Synchronisationseinrichtungen (16), fähig ein die Daten in dem Korrelationssignal lokalisierendes Synchronisationssignal (S) zu liefern,
- Decodiereinrichtungen (16) zur Wiederherstellung der Daten (D),

wobei dieser Empfänger **dadurch gekennzeichnet ist, dass** die Synchronisationseinrichtungen Einrichtungen zur verzögerten Doppelmultiplikation des abgetasteten Korrelationssignals sind, die Einrichtungen (50, 52, 54) (60, 62, 64) umfassen, die fähig sind, eine erste verzögerte Multiplikation durchzuführen, darin bestehend, einen Abtastwert des Korrelationssignals mit dem konjugierten vorhergehenden Abtastwert zu multiplizieren, dann eine zweite verzögerte Multiplikation durchzuführen, darin bestehend, einen Abtastwert des derart erhaltenen Signals mit dem konjugierten vorhergehenden Abtastwert des genannten erhaltenen Signals zu multiplizieren.

**Claims**

1. Method for receiving a CDMA signal, comprising an operation of correlation with appropriate pseudo-random sequences, an operation of synchronization for locating data in the correlation signal obtained, and an operation of retrieving data, this method being **characterized in that** the synchronization operation implements double delayed multiplication of the sampled correlation signals, consisting of multiplying a sample of the correlation signal by the conjugate preceding sample (50, 52, 54), then a second delayed multiplication consisting of multiplying a sample of the thus obtained signal by the conjugate preceding sample of said signal obtained (60, 62, 64).

2. Method according to claim 1, wherein a maximum of the signal obtained through double delayed multiplication (66, 68) is searched for, and a correlation signal (S) corresponding to said maximum is delivered.

3. Method according to claim 2, wherein an average is calculated of two successive maximum values obtained before the synchronization signal is generated.

4. Method according to claim 4 (sic), wherein the correlation signal being a complex signal with a real component ($I_k$) and an imaginary component ($Q_k$), the signal obtained after the first delayed multiplication being in turn also complex with a real component ($DOT^{(1)}_k$) and an imaginary component ($CROSS^{(1)}_k$):

   - for performing the first delayed multiplication the quantity $I_k I_{k-1} + Q_k Q_{k-1}$ is calculated, supplying the real component ($DOT^{(1)}_k$) of the new signal, the quantity $Q_n I_{n-1} - I_n Q_{n-1}$ is calculated, supplying the component ($CROSS_k^{(1)}$) of the new signal,
   - for performing the second delayed multiplication, the quantity $(DOT_k^{(1)})(DOT^{(1)}_{k-1}) + (CROSS^{(1)}_k)(CROSS^{(1)}_{k-1})$ is calculated, giving the real component ($DOT^{(2)}_k$) of the final signal, and the quantity $(DOT^{(1)}_{k-1})(CROSS^{(1)}_k) - (DOT_k)(CROSS^{(1)}_{k-1})$ is calculated giving the imaginary component ($CROSS^{(2)}_k$) of the final signal.

5. CDMA signal receiver for implementing the method according to claim 1, this receiver comprising:

   - a correlation means (10(I), 10(Q)) functioning with appropriate pseudo-random sequences, and delivering a correlation signal,
   - a synchronization means (16) for delivering a synchronization signal (S) locating data within the correlation signal,
   - a decoding means (16) for retrieving the data (D),

   this receiver being **characterized in that** the synchronization means is a sampled correlation signal double delayed multiplication means, comprising means (50, 52, 54, 60, 62, 64) able to perform a first delayed multiplication consisting of multiplying a sample of the correlation signal by the preceding conjugate sample, then a second delayed multiplication consisting of multiplying a sample of the thus obtained signal by the conjugate preceding sample of the said signal obtained.

FIG. 1

FIG. 2

SIGNAL DE
SYNCHRONISATION

FIG. 3

FIG. 4

FIG. 5

FIG. 6

FIG. 7

FIG. 8